# EUROPEAN PATENT APPLICATION

(11) **EP 3 460 465 A1**
(43) Date of publication of application: **27.03.2019**
(21) Application number: 18192109.9
(22) Date of filing: 31.08.2018
(51) Int. Cl.: G01N 29/22, G01N 33/32, G01M 7/02, G01M 5/00

(54) **JIG FOR ULTRASONIC FATIGUE TESTING MACHINE**

(30) Priority: 19.09.2017 JP 2017179086
(71) Applicant: Shimadzu Corporation, Kyoto 604-8511 (JP)
(72) Inventor: MATSUURA, Tohru, Kyoto-shi, Kyoto 604-8511 (JP)
(74) Representative: Mewburn Ellis LLP

(57) **Abstract**

A pair of jigs has the same mass and a weight is adjusted in consideration of a test piece shape so that stress of a center portion of a test piece becomes a desired value. That is, the jig serves as a weight adjustment tool for adjusting a resonance frequency and stress of the test piece. The upper and lower jigs are attached to both ends of the test piece S so that the center of gravity of the upper jig and the center of gravity of the lower jig are located on a perpendicular line passing through the center portion of the test piece.

## Description

### [Field]

The present invention relates to a jig for an ultrasonic fatigue testing machine attached to a test piece when performing a fatigue test by resonating the test piece using an ultrasonic wave.

### [Background]

In an ultrasonic fatigue test in which a vibration is applied to a test piece by using ultrasonic waves to evaluate a fatigue life of a material, stress is repeatedly applied to the test piece by resonating the test piece with, for example, a sinusoidal vibration of 20 kHz. In an ultrasonic fatigue testing machine, an ultrasonic vibration generated from an ultrasonic transducer is amplified by a horn and is transmitted to the test piece. For this reason, there is a need to reliably attach the test piece to the horn. From the viewpoint of the transmission property of the vibration energy, the test piece is attached to the horn by screw-connection (see Patent Literature 1).

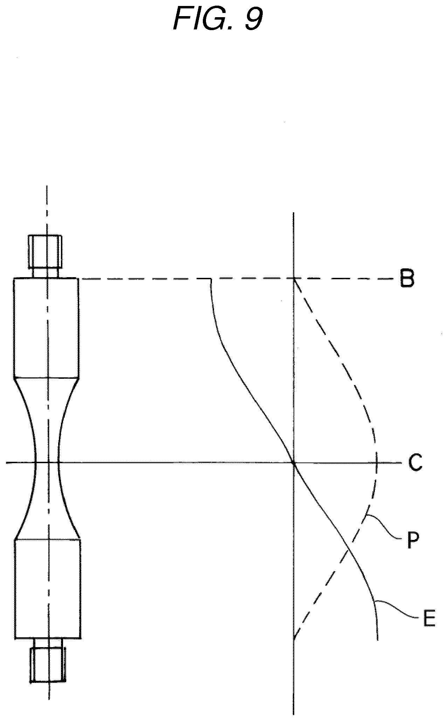

Fig. 9 is an explanatory diagram illustrating a relationship of a shape of an annular test piece of the related art with respect to stress curve and an amplitude curve. In this drawing, an annular test piece is illustrated on the left side of the drawing and an axial stress curve P indicated by a dashed line and a displacement curve E indicated by a solid line are illustrated on the right side of the drawing.

A test piece for an ultrasonic fatigue test needs to have the same resonance frequency as the ultrasonic vibration generated from the ultrasonic transducer. Thus, as illustrated in Fig. 9, a shape of the test piece is designed such that stress amplification becomes zero at a test piece attachment position B in the horn (becomes an antinode of a displacement vibration) and stress amplification becomes maximal at a center position C of the test piece (becomes a node of the displacement vibration).

[Patent Literature 1] JP-A-5-87719

### [Summary]

In the case of a metal material, a male screw corresponding to a female screw formed at a front end of the horn is integrally formed with a body of the test piece at the time of manufacturing the test piece by processing the material (see Fig. 9 of Patent Literature 1). The ultrasonic fatigue testing machine is designed for a standard annular test piece. Accordingly, even when a plate-shaped test piece is manufactured for an ultrasonic fatigue test, a male screw having a screw diameter corresponding to the female screw of the horn needs to be formed similarly to the annular test piece. It is desirable to use a material in which the plate thickness of the plate-shaped test piece is sufficiently thicker than the screw diameter, but when the test piece having the plate thickness thinner than the screw diameter needs to be manufactured, the screw needs to be processed with high accuracy. As a result, it is difficult to manufacture the plate-shaped test piece.

In recent years, a fatigue test with high stress of 1000 MPa is desired for high-strength steel. When a test is performed on the plate-shaped test piece by an ultrasonic fatigue testing machine designed for a general annular test piece, the mass of both ends of the test piece in the plate shape is smaller than that of the annular shape. Accordingly, when the width dimension ratio is the same at the center portion and both ends of the test piece, stress at the center potion during resonance becomes smaller than a half of the stress of the annular test piece.

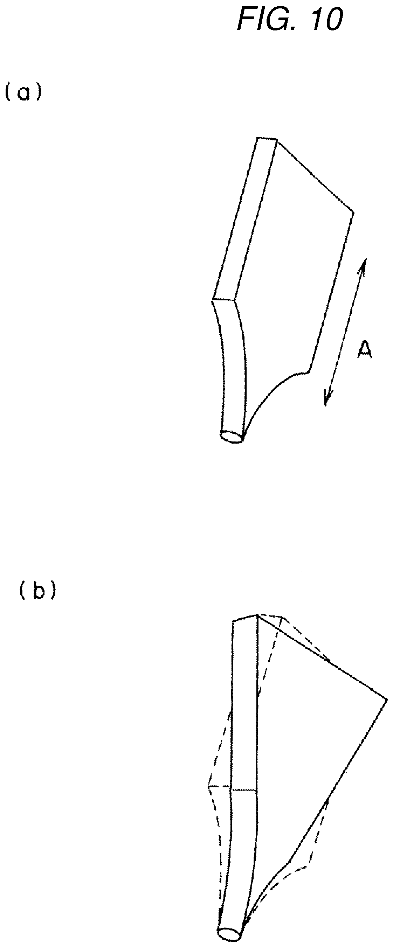

Fig. 10 is a diagram illustrating a resonance simulation of a plate-shaped test piece model. Additionally, Fig. 10 illustrates a 1/2 model in which the plate-shaped test piece designed so that stress at the center portion during resonance becomes the same as that of the annular test piece is cut at the center portion thereof. Fig. 10(a) illustrates a state before the resonance occurs. Fig. 10(b) illustrates a state where a maximal sinusoidal stress waveform which can be realized by a general ultrasonic fatigue testing machine is applied to the test piece, where the test piece before the resonance occurs is indicated by a dashed line and the test piece having a lateral vibration during resonance is indicated by a solid line.

The plate-shaped test piece of Fig. 10 is designed so that the stress at the center portion is the same as that of the annular test piece by a configuration in which the width dimensions at both ends are larger than the diameter of the center portion. In a normal test, the test piece is vibrated longitudinally in parallel to the wave traveling direction (a direction of an arrow A of Fig. 10(a)). However, in the plate-shaped test piece, a lateral vibration occurs at frequencies close to longitudinal vibration as indicated by a solid line in Fig. 10 (b) and thus a normal test is hindered. In this way, there is a case where the plate-shaped test piece corresponding to high stress is not easily manufactured.

As described above, there is a limit to the method of processing a material itself so that the mass of both ends of the test piece is sufficiently larger than that of the center portion of the test piece in order to apply desired stress to the center portion of the test piece. Meanwhile, there is also a material which cannot be easily processed into the shape of the test piece. As such a material, for example, there are composite materials such as carbon fiber reinforced plastic (CFRP) which is being developed in recent years. In the composite materials, it is difficult to process the material into a test piece shape for a conventional ultrasonic fatigue test by directly threading the material or tapping the material in parallel to the fiber laminating direction. As a result, it is difficult to manufacture a test piece corresponding to high stress.

The invention has been made to solve the above-described problems and an object of the invention is to provide a jig for an ultrasonic fatigue testing machine capable of facilitating a design of a test piece formed of various materials and performing a fatigue test in which high stress is repeatedly applied to a test piece.

According to the invention, there is provided a jig for an ultrasonic fatigue testing machine used in a fatigue test in which a vibration generated from an ultrasonic transducer is amplified by a horn and a test piece connected to a front end of the horn is resonated, including: a main body portion; and a grip portion holding an end of the test piece, in which the jig is attached to both ends of the test piece to adjust the mass of both ends of the test piece.

According to the invention, there is provided the jig for the ultrasonic fatigue testing machine of claim 1, in which an end of the main body portion opposite to the grip portion is provided with a screw portion to be connected to the horn.

According to the invention, there is provided the jig for the ultrasonic fatigue testing machine of claim 1, in which when an end of the main body portion is connected to the horn, an adjustment plate is inserted between the main body portion and the horn, and when the end of the main body portion serves as a free end, the adjustment plate is attached to the free end to adjust the mass of both ends of the test piece.

According to the invention, there is provided the jig for the ultrasonic fatigue testing machine of claim 1, in which the grip portion includes a pressing force generation member that sandwiches the end of the test piece by a pressing force using a screw when holding the end of the test piece.

According to the invention, there is provided the jig for the ultrasonic fatigue testing machine of claim 4, in which the mass of both ends of the test piece is adjusted by changing the weight of the pressing force generation member.

### [Advantageous Effects of the Invention]

According to the invention, since the jig for the ultrasonic fatigue testing machine is attached to both ends of the test piece, it is possible to increase the mass near the end of the test piece. Accordingly, since it is possible to increase the mass near the end of the test piece in relation to the center portion of the test piece without increasing the mass of the end of the test piece itself, it is possible to repeatedly apply high stress as a target value to the center portion of the test piece. Thus, it is possible to perform a fatigue test with high stress of 1000 MPa for the test piece even in a current device without increasing the capacity of the ultrasonic fatigue testing machine designed for the annular test piece. Further, since the jig for the ultrasonic fatigue testing machine is attached to both ends of the test piece, it is not necessary to provide the screw portion to be connected to the horn of the ultrasonic fatigue testing machine at the test piece itself when manufacturing the test piece and it is possible to perform an ultrasonic fatigue test for a material which is not easily subjected to threading. If the jig for the ultrasonic fatigue testing machine is prepared as a pair of jigs each having a different weight, even when the accuracy of the desired resonance frequency is not obtained in the test piece manufactured according to a length obtained by a calculation, it is possible to easily adjust the resonance frequency by replacing the jig for the ultrasonic fatigue testing machine attached to the test piece with another jig having a different weight since the resonance frequency **ω** is √(spring constant/mass) in a simple spring-mass system. For this reason, since there is no need to determine an optimal test piece length by measuring each resonance frequency after manufacturing test pieces each having a different length as in the related art, it is possible to easily manufacture the test piece.

According to the invention, since the mass of both ends of the test piece is adjusted by the adjustment plate, it is possible to easily and finely adjust the resonance frequency corresponding to target stress applied to the center portion of the test piece by adjusting the number of the adjustment plates or the thickness thereof.

According to the invention, it is possible to repeatedly use the pair of jigs for the ultrasonic fatigue testing machine while replacing the test piece.

According to the invention, since it is possible to change the weight of the pressing force generation member in response to the target stress applied to the center portion of the test piece, it is possible to more easily change the weight of the jig for the ultrasonic fatigue testing machine and thus to finely adjust the resonance frequency of the test piece.

### [Brief Description of the Drawings]

Fig. 1 is an outline diagram of an ultrasonic fatigue testing machine which performs a fatigue test by attaching a jig 10 for the ultrasonic fatigue testing machine according to the invention thereto;
Fig. 2 is an outline diagram of the jig 10 for the ultrasonic fatigue testing machine according to the invention;
Fig. 3 is an outline diagram illustrating a weight adjustment of the jig 10 for the ultrasonic fatigue testing machine;
Fig. 4 is an outline diagram of a jig 20 for an ultrasonic fatigue testing machine according to a second embodiment of the invention;
Fig. 5 is a front outline diagram of the jig 20 for the ultrasonic fatigue testing machine according to the second embodiment of the invention;
Fig. 6 is a front outline diagram of a jig 30 for an ultrasonic fatigue testing machine according to a third embodiment of the invention;
Fig. 7 is an outline diagram of a jig 40 for an ultrasonic fatigue testing machine according to a fourth embodiment of the invention;
Fig. 8 is a cross-sectional outline diagram of the jig 40 for the ultrasonic fatigue testing machine according to the fourth embodiment of the invention;
Fig. 9 is an explanatory diagram illustrating a relationship of a shape of a conventional annular test piece with respect to a stress curve and an amplitude curve; and
Fig. 10 is a diagram illustrating a resonance simulation of a plate-shaped test piece model.

### Detailed Description

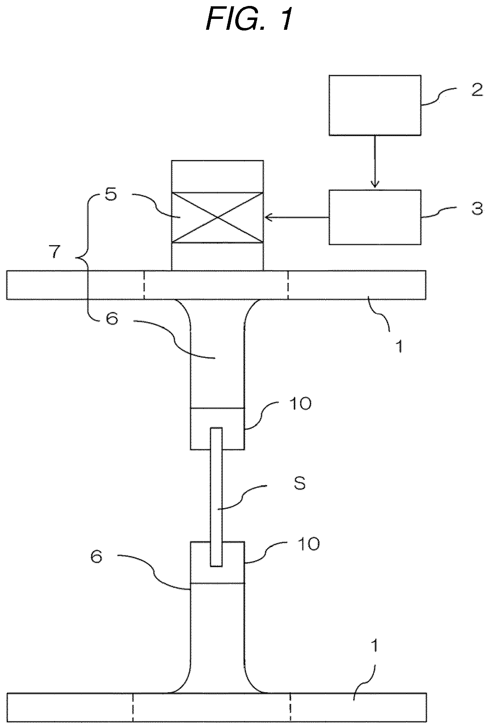

Hereinafter, embodiments of the invention will be described with reference to the drawings. Fig. 1 is an outline diagram of an ultrasonic fatigue testing machine which performs a fatigue test by attaching a jig 10 for the ultrasonic fatigue testing machine according to the invention thereto.

The ultrasonic fatigue testing machine is used to perform a fatigue test by resonating a test piece S using ultrasonic waves and includes a vibration portion 7 which includes an ultrasonic transducer 5 vibrated by a signal generated from an oscillator 3 and a horn 6 amplifying a vibration and transmitting the vibration to the test piece S and a frame 1 which is attached to the vibration portion 7. The oscillator 3 generates the signal based on a test frequency set by a control unit 2. The arrangement of the vibration portion 13 and the test piece S illustrated in Fig. 1 is set to perform a fatigue test in which a longitudinal vibration is applied to the test piece S.

The test piece S is a plate-shaped test piece and both ends thereof are sandwiched by a pair of jigs 10 for the ultrasonic fatigue testing machine (hereinafter, the jig 10 for the ultrasonic fatigue testing machine will be referred to as the "jig 10" if necessary in the specification). The pair of jigs 10 has the same mass and the mass is adjusted in consideration of the test piece shape so that the stress at the center portion of the test piece S becomes a desired value (target stress) within the ability range of the device. That is, the jig 10 serves as a weight adjustment tool for adjusting the resonance frequency and the stress of the test piece S. In order to adjust the weight, the length or width of the jig 10 may be adjusted. The upper and lower jigs 10 are attached to both ends of the test piece S so that the center of gravity of the upper jig 10 and the center of gravity of the lower jig 10 are located on a vertical line passing through the center portion of the test piece S. When the upper and lower jigs 10 and the test piece S are aligned to one another at the center of gravity thereof, it is possible to prevent the unnecessary lateral resonance. The upper jig 10 is connected to the horn 6 by the screw-connection. The lower jig 10 is connected to the horn 6 fixed to the frame 1 by the screw-connection. In the example of Fig. 1, the lower jig 10 is also connected to the horn 6 resonated at the same cycle in order to apply average stress to the test piece S. Additionally, the lower jig 10 may be a free end according to the purpose of the test. Further, in the example of Fig. 1, a longitudinal vibration is applied to the test piece S from the upper side of the test piece S, but when a vibration is applied to the test piece S from the upper and lower sides of the frame 1, the horn 6 connected to the lower jig 10 is also connected to the ultrasonic transducer 5 and the oscillator 3.

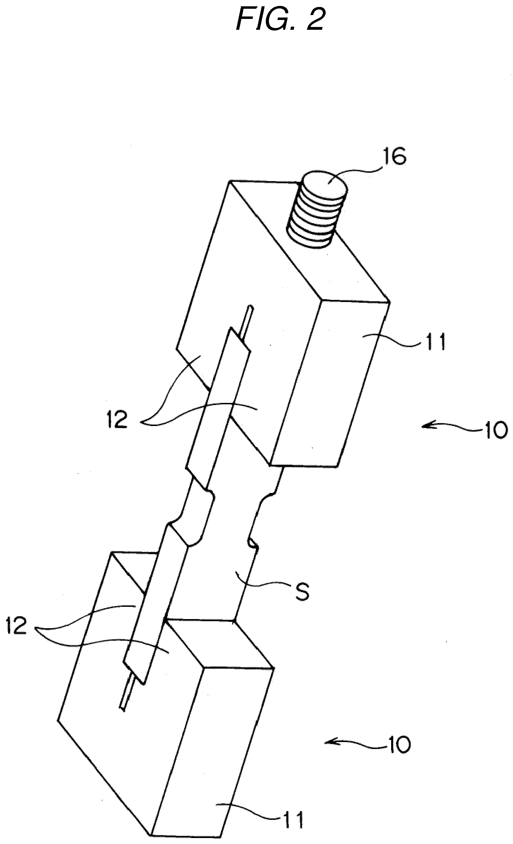

Fig. 2 is an outline diagram of the jig 10 for the ultrasonic fatigue testing machine according to the invention.

The jig 10 includes a main body portion 11 and a pair of grip portions 12 which sandwiches the end of the test piece S. An end (an end surface) of the main body portion 11 of the jig 10 at a connection side to the horn 6 and a side opposite to the grip portion 12 is provided with a screw portion 16 which is connected to the front end of the horn 6 by the screw-connection. The end of the test piece S is inserted between the pair of grip portions 12 and the test piece S and the jig 10 are integrally held by shrink fitting, crimping, or fixing such as welding, brazing, or adhering. Additionally, the pair of jigs 10 is attached to the test piece S so that the centers of gravity of the pair of jigs 10 are aligned to the line passing through the center portion of the test piece S.

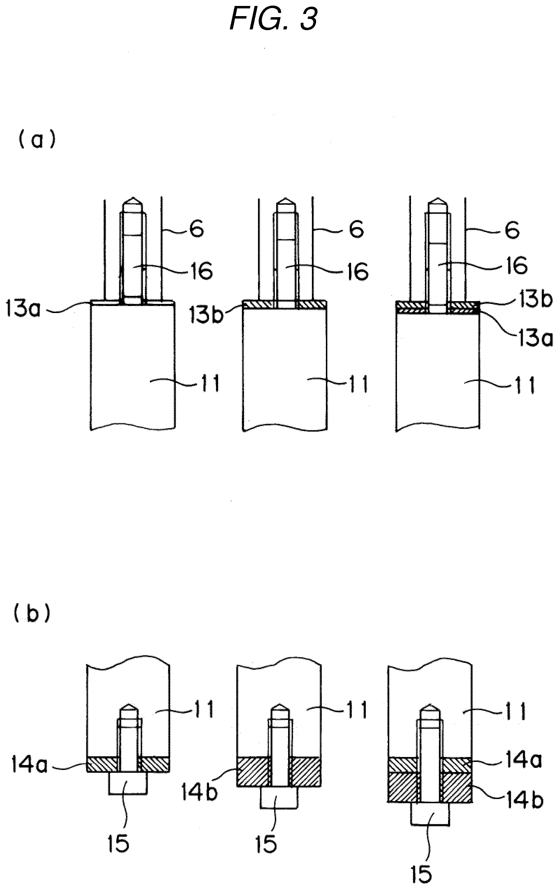

Fig. 3 is an outline diagram illustrating a weight adjustment of the jig 10 for the ultrasonic fatigue testing machine. Fig. 3(a) illustrates the weight adjustment of the jig 10 connected to the horn 6 by the screw-connection and Fig. 3(b) illustrates the weight adjustment when the lower jig 10 is a free end.

The pair of jigs 10 is prepared to have the same mass according to the size of the test piece S. Meanwhile, in the prepared jig 10, there is a case where the weight is insufficient for the stress at the center portion of the test piece S to become a desired value (target stress). In such a case, as illustrated in Fig. 3, the weight of the pair of jigs 10 is adjusted.

Even when the accuracy of the desired resonance frequency is not obtained at the test piece S prepared to have a length obtained by a calculation, the weight of the jig 10 is adjusted. In this way, when the jig 10 is attached to the test piece S, the substantial mass of both ends of the test piece S can be set to be sufficiently larger than that of the center portion so that stress at the center portion of the test piece S becomes a target value. In this embodiment, a plurality of adjustment plates 13a and 13b each having a different thickness are provided. The adjustment plates 13a and 13b are provided with holes through which the screw portion 16 passes. Then, the adjustment plates 13a and 13b each having a different thickness are selected to have a target weight and are inserted between the front end of the horn 6 and the jig 10 so that the weight of both ends of the test piece S is adjusted. Additionally, when the lower jig 10 is not connected to the horn 6 and is used as a free end, an end surface of the jig 10 is provided with a male screw and the adjustment plates 14a and 14b each having a different thickness are fixed by a bolt 15 as illustrated in Fig. 3(b).

When a test starts by connecting the jig 10 to the front end of the horn 6 while the pair of jigs 10 is attached to both ends of the test piece S, the jig 10 is resonated along with the test piece S. As in the related art, it is not necessary to process the test piece S to be directly connected to the horn 6. Then, the length of the test piece S is determined in consideration of the weight of the jig 10 so that the connection portion between the horn 6 and the jig 10 becomes the antinode of the displacement vibration and the center portion of the test piece S becomes the node of the displacement vibration.

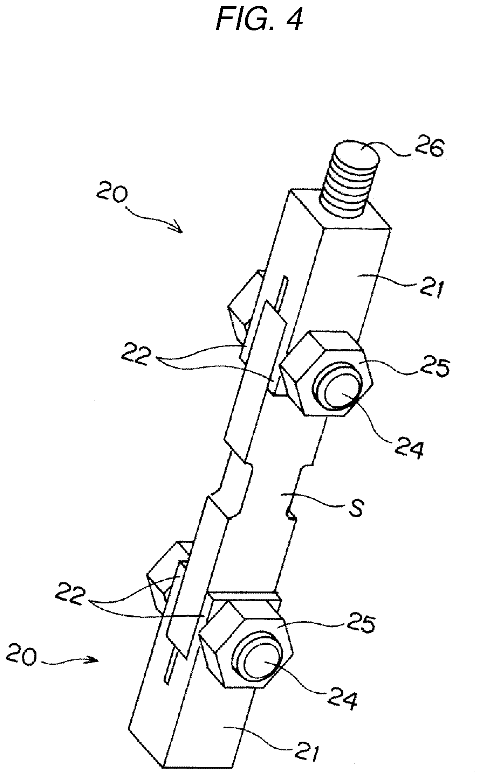

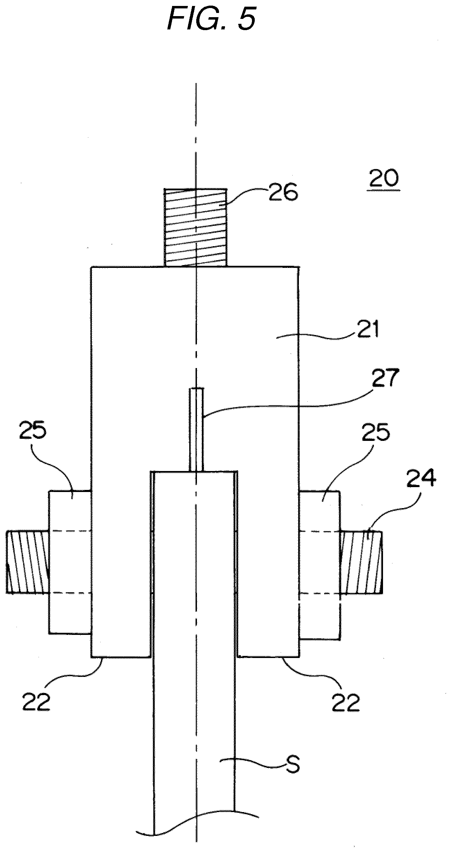

Fig. 4 is an outline diagram of a jig 20 for an ultrasonic fatigue testing machine according to the invention. Fig. 5 is a front outline diagram of the jig 20 for the ultrasonic fatigue testing machine according to the invention.

The jig 20 includes a main body portion 21 and a pair of grip portions 22 which sandwiches the end of the test piece S by a pressing force. The main body portion 21 of the jig 20 at the connection side to the horn 6 is provided with a screw portion 26 which is connected to the front end of the horn 6 by the screw-connection. The pair of grip portions 22 is provided with a hole through which a screw 24 penetrating the test piece S and the grip portion 22 passes. Additionally, it is necessary to form a hole, through which the screw 24 passes, in the test piece S to be attached to the jig 20. Further, it is ideal that no gap is formed while the end of the test piece S is inserted between the pair of grip portions 22. In this embodiment, as illustrated in Fig. 5, since a split 27 is provided at a position of the main body portion 21 near the end of the test piece S, the inner surface of the grip portion 22 can be sufficiently brought into close contact with the side surface of the end of the test piece S by pressing the left and right two nuts 25 in a balanced manner and generating a pressing force to act on the test piece S. Additionally, a spacer may be inserted between the inner surface of the grip portion 22 and the end of the test piece S. As the spacer, for example, soft metal such as aluminum used as a tab can be adopted.

A user reliably clamps and holds the test piece S by the pair of grip portions 22 by fastening a nut 25 to both ends of the screw 24 and operating the screw 24 and the nut 25 so that the centers of gravity of the pair of jigs 20 are aligned to the line passing through the center portion of the test piece S. In this way, when the center of gravity of the jig 20 is aligned to the center of gravity of the test piece S, unnecessary lateral resonance can be prevented. Additionally, since the jig 20 of the second embodiment is fixed to the test piece S by a screw differently from the jig 10 of the first embodiment, the test piece S can be repeatedly used while being replaced.

When a test starts by connecting the jig 20 to the front end of the horn 6 while the pair of jigs 20 is attached to both ends of the test piece S, the jig 20 is resonated along with the test piece S. That is, the test piece S and the jig 20 are entirely resonated at the test frequency. When the weight of the jig 20 is adjusted as described above, the substantial mass of both ends of the test piece S can be set to be sufficiently larger than that of the center portion so that stress at the center portion of the test piece S becomes a target value. For this reason, in the existing ultrasonic fatigue testing machine, it is possible to perform a test for a material which cannot be easily subjected to a fatigue test of repeatedly applying high stress to the center portion of the test piece S without spending time and effort for manufacturing the test piece S and designing the test piece shape.

As in the related art, there is no need to process the test piece S so that the test piece is directly connected to the horn 6. Then, the length of the test piece S is determined in consideration of the weight of the jig 20 so that the connection portion between the horn 6 and the jig 20 becomes an antinode of the displacement vibration and the center portion of the test piece S becomes a node of the displacement vibration. In this embodiment, it is possible to easily change the height dimension of the nut 25, the length of the screw 24, the thickness of the nut 25 fastened to the screw 24, or the mass of both ends of the test piece S including the jig 20 connected to the front end of the horn 6 as the number increases or decreases. Thus, it is possible to adjust the weight of the jig 20 by changing the weight of the separable member such as the screw 24 or the nut 25 even when the accuracy of the desired resonance frequency is not obtained with the length of the test piece S obtained by a calculation.

In this way, in the jig 20 of Fig. 5, the screw 24 and the nut 25 are used as a pressing force generation member for pressing the pair of grip portions 22 against the test piece S and the weight of the jig 20 is changed by the nut 25. Additionally, the jig 20 may be provided as a pair of jigs such that the weight of the main body portion 21 of the jig 20 is different and may be replaced for the test piece S in response to a desired resonance frequency or target stress applied to the center portion of the test piece S. Further, the adjustment plate 13a, 13b, 14a, or 14b may be inserted into the pair of jigs 20 to adjust the weight as in the case of the first embodiment illustrated in Fig. 3.

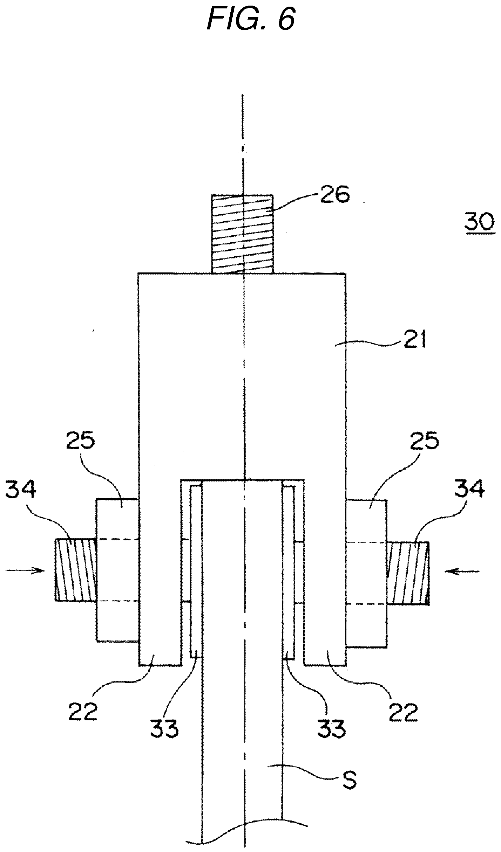

Fig. 6 is a front outline diagram of a jig 30 for an ultrasonic fatigue testing machine according to a third embodiment of the invention. The same members as those in the second embodiment are denoted by the same reference numerals and a detailed description thereof will be omitted.

The jig 30 of the embodiment includes a pair of screws 34 instead of the screw 24. The screw 34 is, for example, a hexagon socket stop screw, a slit stop screw, or the like and can be tightened using a tool. Each of the left and right grip portions 22 is provided with a screw hole into which the screw 34 is threaded. A spacer 33 contacting the side surface of the end of the test piece S is disposed at the front end of the screw 34. At in the case of attaching the jig 20 of the second embodiment, the jig 30 is used when it is difficult to process a hole through which the screw 24 passes at both ends of the test piece S. The user clamps and holds the test piece S to the pair of grip portions 22 by operating each of the screws 34 threaded into the screw holes formed in the pair of grip portions 22 in a balanced manner and bringing the spacer 33 into close contact with the side surfaces of both ends of the test piece S so that a pressing force acts thereon. Then, the nut 25 is used to adjust the weight of the jig 30. Here, the test piece S is clamped by the screw 34 and the nut is threaded into the screw 34 so that the test piece is fixed against the outer surface of the grip portion 22. Accordingly, it is possible to adjust the weight of the jig 30 by using the nuts 25 each having a different thickness.

Additionally, in the jig 30 of Fig. 6, the screw 34 is used as a pressing force generation member that presses the pair of grip portions 22 against the test piece S and the weight of the jig 20 is changed by the nut 25. However, a bolt may be employed instead of the screw 34 and the nut 25. Even when the size of the bolt head is changed, the weight of the jig 30 can be changed.

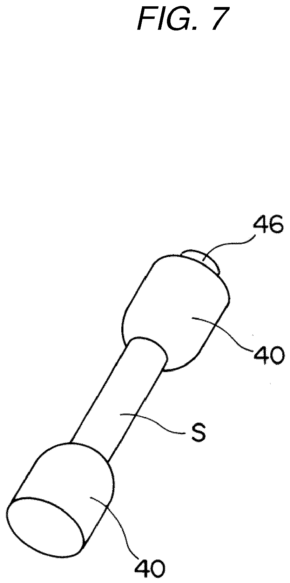

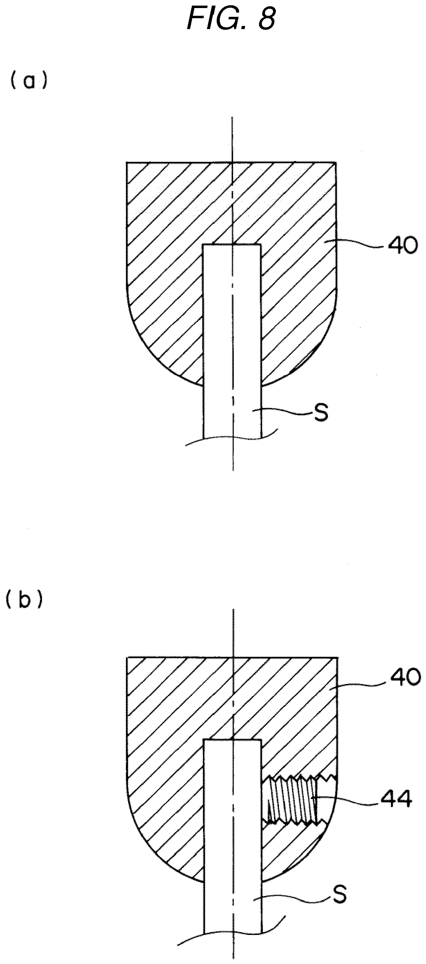

Fig. 7 is an outline diagram of a jig 40 for an ultrasonic fatigue testing machine according to a fourth embodiment of the invention and Fig. 8 is a cross-sectional outline diagram thereof. In addition, Fig. 8(a) illustrates the jig 40 which holds the test piece S by shrink fitting, crimping, or fixing such as welding, brazing, or adhering and Fig. 8(b) illustrates a modified example of the jig 40 which holds the test piece S by the screw 44.

The jig 40 of the embodiment is used to hold the test piece S called a steel wire. Here, it is not practical to prepare the test piece S having a bent shape at the center portion as described with reference to Fig. 9 when performing a test on the steel wire. However, even in the steel wire of which the center portion is difficult to be bent thinner, it is possible to apply high stress to the center portion of the test piece S by additionally attaching the jig 40 to both ends as illustrated in Fig. 7.

One end of the jig 40 is provided with a screw portion 46 to be connected to the horn 6 and the other end thereof is provided with a hole into which the front end of the test piece S is insertable as illustrated in Fig. 8(a). Additionally, since the inner wall of the hole is in close contact with the side surface of the test piece S, this hole serves as the grip portion of the invention. That is, the end of the test piece S is inserted into the hole and the jig 40 is attached to the test piece S by shrink fitting, crimping, or fixing such as welding, brazing, or adhering. Further, as illustrated in Fig. 8(b), the test piece S may be held by the jig 40 in such a manner that a screw hole is provided at the side portion of the jig 40 so as to perpetrate the inner wall of the hole and the screw 44 is inserted so that the front end of the screw 44 is in close contact with the side surface of the test piece S. Further, as in the case of the first embodiment illustrated in Fig. 3, the weight can be adjusted by inserting the adjustment plate 13a, 13b, 14a, or 14b into the pair of jigs 40.

When the jigs 10, 20, 30, and 40 of the invention are used, since there is no need to perform a method of preparing the test pieces S each having a different length, measuring a resonance frequency thereof, and determining an optimal length of the test piece S in order to finely adjust the optimal resonance frequency, the test piece S can be easily manufactured. For example, a plate-shaped test piece processed into a shape for a general static tensile test can be used for an ultrasonic fatigue test depending on the material.

### [Reference Signs List]

- 1: frame
- 2: control unit
- 3: oscillator
- 5: ultrasonic transducer
- 6: horn
- 7: vibration portion
- 10: jig
- 11: main body portion
- 12: grip portion
- 16: screw portion
- 20: jig
- 21: main body portion
- 22: grip portion
- 24: screw
- 25: nut
- 26: screw portion
- 27: split
- 30: jig
- 33: spacer
- 34: screw
- 40: jig
- 44: screw
- 46: screw portion
- S: test piece

## Claims

1. A jig for an ultrasonic fatigue testing machine used in a fatigue test in which a vibration generated from an ultrasonic transducer is amplified by a horn and a test piece connected to a front end of the horn is resonated, comprising:
a main body portion; and
a grip portion holding an end of the test piece,
wherein the jig is attached to both ends of the test piece to adjust the mass of both ends of the test piece.

2. The jig for the ultrasonic fatigue testing machine according to claim 1,
wherein an end of the main body portion opposite to the grip portion is provided with a screw portion to be connected to the horn.

3. The jig for the ultrasonic fatigue testing machine according to claim 1,
wherein when an end of the main body portion is connected to the horn, an adjustment plate is inserted between the main body portion and the horn, and
when the end of the main body portion serves as a free end, the adjustment plate is attached to the free end to adjust the mass of both ends of the test piece.

4. The jig for the ultrasonic fatigue testing machine according to claim 1,
wherein the grip portion includes a pressing force generation member that sandwiches the end of the test piece by a pressing force using a screw when holding the end of the test piece.

5. The jig for the ultrasonic fatigue testing machine according to claim 4,
wherein the mass of both ends of the test piece is adjusted by changing the weight of the pressing force generation member.
